# EUROPEAN PATENT APPLICATION

(11) **EP 4 826 897 A1**
(43) Date of publication of application: **21.10.2026**
(21) Application number: 24903227.7
(22) Date of filing: 07.08.2024
(51) Int. Cl.: H01M 50/564, H01M 50/562

(54) **METHOD FOR MANUFACTURING TERMINAL COMPONENT FOR BATTERY**

(30) Priority: 11.12.2023 JP 2023208590
(71) Applicant: Proterial, Ltd., Tokyo 135-0061 (JP)
(72) Inventor: KASHIWAGI, Seiki, Suita-shi, Osaka 564-0043 (JP); YOKOTA, Masayuki, Suita-shi, Osaka 564-0043 (JP)
(74) Representative: Meissner Bolte Partnerschaft mbB
(86) International application number: PCT/JP2024/028272
(87) International publication number: WO 2025/126564

(57) **Abstract**

Occurrence of burrs at an outer edge portion of a clad piece is suppressed. Provided is a method for manufacturing a terminal component including a step (1) of disposing a clad piece 31 formed by laminating and joining a high-ductility conductor layer 31A and a low-ductility conductor layer 31B in a thickness direction in a lower die 50 such that the high-ductility conductor layer 31A is in contact with a bottom surface 52 of a vertical hole portion 51 opening upward in the lower die 50, and a step (2) of plastically deforming, using a concave portion 56 for forming a convex portion that opens downward and extends upward in an upper die 55A, and is for forming the convex portion 32C corresponding to a shaft portion at a center of the clad piece 31, the clad piece 31 toward the concave portion 56 for forming a convex portion to form a convex portion 32C inside the concave portion 56 for forming a convex portion, while restraining the plastic deformation of a side surface of the clad piece 31 by an inner peripheral wall 53 of the vertical hole portion 51 of the lower die 50, when the upper die 55A is inserted into the vertical hole portion 51 of the lower die 50 to press an upper surface of the low-ductility conductor layer 31B of the clad piece 31.

## Description

### TECHNICAL FIELD

The present invention relates to a method for manufacturing a terminal component for a battery, for example, a method for manufacturing a terminal component for a battery used for a secondary battery module such as a lithium ion secondary battery.

### BACKGROUND ART

Patent Literature 1 describes a lithium ion secondary battery (LIB) including a positive electrode made of an aluminum foil, a negative electrode made of a copper foil, a separator between the positive electrode and the negative electrode, and an electrolytic solution, in which the positive electrode, the negative electrode, the separator, and the electrolytic solution are accommodated in a case. In the LIB, the positive electrode is connected to a positive electrode current collector in the case, and the positive electrode current collector is electrically connected to a positive electrode terminal penetrating the case. The positive electrode terminal is connected to a bus bar outside the case. On the other hand, the negative electrode is connected to a negative electrode current collector in the case, and the negative electrode current collector is electrically connected to a negative electrode terminal penetrating the case. The negative electrode terminal is connected to the bus bar outside the case.

In recent years, bus bars made of aluminum or an aluminum alloy (Al bus bars) have been used for weight reduction. Therefore, in the LIB, a positive electrode terminal made of aluminum or an aluminum alloy is used to connect the positive electrode current collector made of aluminum or an aluminum alloy with the Al bus bar. On the other hand, copper or a copper alloy is used for the negative electrode current collector. Therefore, Patent Literature 1 describes that, in the negative electrode terminal, a portion in contact with the negative electrode current collector is made of copper or a copper alloy, and a portion in contact with the Al bus bar is made of aluminum or an aluminum alloy.

Specifically, the negative electrode terminal of Patent Literature 1 includes a shaft portion and a flange portion having a radial spread from the shaft portion in a radial direction, and is formed of a clad material in which a high-ductility conductor layer made of aluminum or an aluminum alloy and a low-ductility conductor layer made of copper or a copper alloy are joined. In Patent Literature 1, an outer shape of the terminal component is formed by press-forming a clad piece having a two-layer structure made of two types of metals. Specifically, the clad material is disposed in a lower die provided with a concave portion corresponding to the shaft portion such that the low-ductility conductor layer faces downward, and is forge-pressed from a side of the high-ductility conductor layer by an upper die. As a result, the battery terminal is formed such that the shaft portion formed by protruding a central portion of the clad material on a side of the low-ductility conductor layer is formed, and the remaining portion of the clad material becomes the flange portion.

Patent Literature 2 describes a terminal component for a secondary battery including a plate-shaped head portion having a bottom surface and an upper surface opposite to the bottom surface, and a shaft portion extending from the bottom surface. The terminal component includes copper (a low-ductility conductor) and aluminum (a high-ductility conductor). A bottom surface of the head portion is made of copper, and an upper surface of the head is made of aluminum. Patent Literature 2 describes that a chamfered portion continuous in a peripheral direction is provided on an outer peripheral portion of the bottom surface of the head portion in order to reduce burrs generated by quickly flowing a high-ductility conductor layer made of aluminum on an upper surface side of the head portion, which is more plastically deformed than copper, and intruding into a gap between a die and a low-ductility conductor layer made of copper on a bottom surface side of the head portion.

### CITATION LIST

### PATENT LITERATURE

Patent Literature 1: JP6581440B
Patent Literature 2: JP2023-62844A

### SUMMARY OF INVENTION

### TECHNICAL PROBLEM

When a clad piece having a two-layer structure in which a high-ductility conductor layer made of aluminum or an aluminum alloy and a low-ductility conductor layer made of copper or a copper alloy are joined, is forge-pressed, and when the low-ductility conductor layer is disposed in a lower die provided with a concave portion corresponding to a shaft portion so as to face downward and the clad piece is forge-pressed by an upper die from the side of the high-ductility conductor layer, the high-ductility conductor layer may intrude between the lower die and the upper die at an outer edge portion of the clad piece, and burrs may occur. When such burrs occur, it takes time and effort to remove the burrs from the clad piece after forming. In addition, after the clad piece is removed from the die, the burr is separated from the clad piece after forming and remains in the lower die or the upper die, which hinders forming of the next clad piece. Therefore, it takes time and effort to clean the lower die or the upper die in which the separated burr may remain.

An object of the present invention is to suppress generation of burrs between a lower die and an upper die at an outer edge portion of a clad piece when manufacturing a terminal component for a battery including a shaft portion extending in a thickness direction of a clad plate and a flange portion extending from the shaft portion in a direction orthogonal to the thickness direction of the clad plate, with the clad plate formed by laminating and joining a high-ductility conductor layer and a low-ductility conductor layer in the thickness direction.

### SOLUTION TO PROBLEM

In order to solve the above problems, a first aspect of the present invention is a method for manufacturing a terminal component for a battery using a clad plate formed by laminating and joining a high-ductility conductor layer and a low-ductility conductor layer having a lower ductility than the high-ductility conductor layer in a thickness direction, the terminal component including:
a shaft portion extending along the thickness direction of the clad plate; and
a flange portion extending from the shaft portion in a direction orthogonal to the thickness direction, the method including:
   a step (1) of disposing, in a lower die, a clad piece formed by punching the clad plate in the thickness direction such that the high-ductility conductor layer is in contact with a bottom surface of a vertical hole portion opened upward in the lower die; and
   a step (2) of plastically deforming, using a concave portion for forming a convex portion that opens downward and extends upward in an upper die, and is for forming a convex portion corresponding to the shaft portion at a center of the clad piece in the orthogonal direction, the clad piece toward the concave portion for forming a convex portion to form the convex portion inside the concave portion for forming a convex portion, while restraining the plastic deformation of a side surface of the clad piece by an inner peripheral wall of the vertical hole portion of the lower die, when the upper die is inserted into the vertical hole portion of the lower die to press an upper surface of the low-ductility conductor layer of the clad piece.

An inner peripheral edge of the inner peripheral wall of the concave portion for forming a convex portion in the upper die is preferably provided with an inclined surface that is inclined upward toward a center in the orthogonal direction.

A gradient of the inclined surface of the inner peripheral edge of the upper die with respect to the bottom surface of the vertical hole portion of the lower die preferably increases toward a center in the orthogonal direction.

It is preferable that the upper die has a plurality of flat surfaces or curved surfaces continuous from an outer peripheral portion of a lower end toward a center in the orthogonal direction, and gradients of the plurality of flat surfaces or curved surfaces with respect to the bottom surface of the vertical hole portion of the lower die increase toward the center in the orthogonal direction.

It is preferable that the upper die has a plurality of conical surfaces continuously inclined upward from an outer peripheral portion of a lower end toward a center in the orthogonal direction, and the plurality of conical surfaces have a smaller taper angle toward an upper portion.

It is preferable that, in the step (2), when a thickness of the high-ductility conductor layer at an outer peripheral edge of the clad piece is defined as TH and a thickness of the low-ductility conductor layer at the outer peripheral edge of the clad piece is defined as TL, the clad piece is extended into the concave portion for forming a convex portion of the upper die until TL/(TH + TL) ≤ 0.2 is satisfied.

After the step (2), a step (3) of forming the shaft portion by extending the convex portion may be included.

After the step (3), a step (4) of forming a bottomed hole portion on one end side of the shaft portion may be included.

After the step (4), a step (5) of forming the flange portion extending in a radial direction from the shaft portion by pressing the other end side opposite to the one end side of the shaft portion may be included.

After the step (5), a step (6) of trimming an outermost peripheral portion of the flange portion may be included.

The steps (1) to (6) are preferably performed by transfer press forming.

### ADVANTAGEOUS EFFECTS OF INVENTION

In the present invention, in the step (1), the high-ductility conductor layer is restrained by the lower die having the vertical hole portion that opens upward, and in the step (2), the high-ductility conductor layer is pressed from the side of the low-ductility conductor layer by the upper die having the concave portion for forming a convex portion that opens downward and extends upward, so that an axial component of a pressing force acting on a central portion is smaller than that of an outer edge portion of the clad piece, and the low-ductility conductor layer is more likely to plastically flow toward the central portion of the clad piece. Thus, this suppresses intrusion of the low-ductility conductor layer between the lower die and the upper die at the outer edge portion of the clad piece, such that the occurrence of burrs of the low-ductility conductor layer between the lower die and the upper die is suppressed. In addition, while being restrained by the lower die, the high-ductility conductor layer is pressed from the side of the low-ductility conductor layer. Thus, this suppresses intrusion of the high-ductility conductor layer between the lower die and the upper die at the outer edge portion of the clad piece, such that the occurrence of burrs of the high-ductility conductor layer between the lower die and the upper die is suppressed.

### BRIEF DESCRIPTION OF DRAWINGS

FIG. 1 is a cross-sectional view of a terminal component 1 according to an embodiment of a terminal component for a battery according to the present invention.
FIG. 2 is a cross-sectional view illustrating a fixed portion between a case 201 and a negative electrode current collector 202 of a battery 200 by the terminal component 1.
FIG. 3 is a cross-sectional view illustrating a step (A) of forming a clad piece 31 (see FIG. 4) from a clad plate 30.
FIG. 4 is a cross-sectional view illustrating a state in which the clad piece 31 is disposed on a die 50 as a lower die.
FIG. 5 is a cross-sectional view illustrating a step (B) of forming a convex portion corresponding to a shaft portion from the clad piece 31.
FIG. 6 is a cross-sectional view illustrating a punch 55B according to another embodiment.
FIG. 7 is a cross-sectional view illustrating an intermediate body 32 formed in the step (B).
FIG. 8 is a cross-sectional view illustrating a state in which the intermediate body 32 is disposed on a die 60.
FIG. 9 is a cross-sectional view illustrating a step (C) of extending a convex portion 32C to form a shaft portion 33C (see FIG. 10).
FIG. 10 is a cross-sectional view illustrating a step (D) of forming an intermediate bottomed hole portion 34D (see FIG. 11) on one end side of the shaft portion 33C.
FIG. 11 is a cross-sectional view illustrating a step (E) of forming a bottomed hole portion 35D (see FIG. 12) on one end side of a shaft portion 34C.
FIG. 12 is a cross-sectional view illustrating a step (F) of forming a flange portion (preform of flange portion) by pressing the other end side of the shaft portion 35D.

### DESCRIPTION OF EMBODIMENTS

Hereinafter, an embodiment of a terminal component for a battery according to the present invention will be described with reference to the drawings by way of configuration examples.

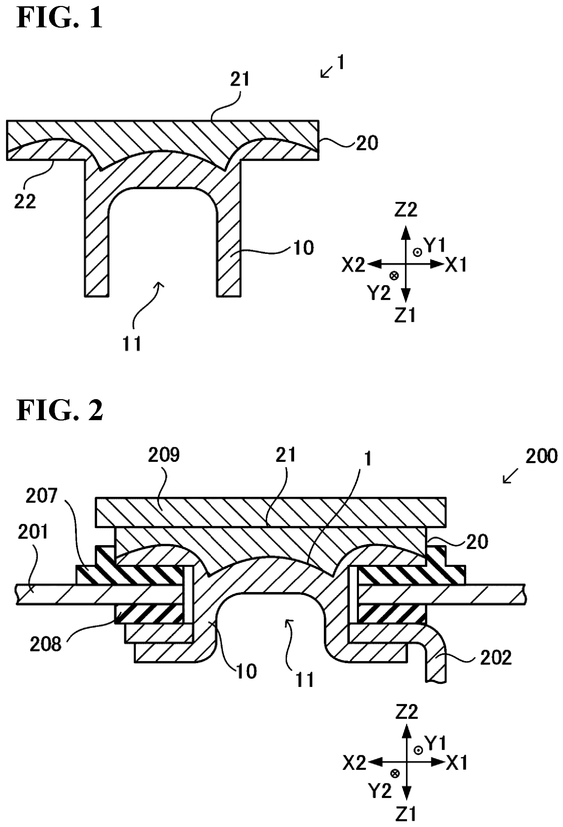

The terminal component for a battery according to the present invention is formed in, for example, a rivet shape. FIG. 1 is a cross-sectional view of a terminal component 1 according to the embodiment of the terminal component for a battery according to the present invention. As illustrated in FIG. 1, the terminal component 1 is formed in a rivet shape. The terminal component 1 includes a shaft portion 10 extending in one direction (in a Z1 direction) and a flange portion 20 extending from one end of the shaft portion 10 in directions orthogonal to the shaft portion 10 (in X1 and X2 directions and in Y1 and Y2 directions orthogonal to X1, X2, Z1, and Z2). A bottomed hole portion 11 is provided at the one end of the shaft portion 10. An outer peripheral portion of the shaft portion 10 is made of a low-ductility conductor. In the flange portion 20, a surface 21 on a side (on a Z2 side) opposite to the shaft portion 10 is formed of a high-ductility conductor, and a surface 22 on the side (on a Z1 side) of the shaft portion 10 is formed of a low-ductility conductor.

The high-ductility conductor preferably has a standard electrode potential comparable to that of a bus bar of a lithium ion battery. As the high-ductility conductor, a material similar to that of the bus bar can be used, and for example, aluminum or an aluminum alloy can be used. Examples of aluminum include A1050 and A1100 in the A1000 series specified in JIS-H4000: 2022. Examples of the aluminum alloy include an Al-Mn alloy of A3000 series and an Al-Mg alloy of A5000 series, which are specified by the same JIS.

The low-ductility conductor is a conductor having a lower ductility than the high-ductility conductor. Here, the "ductility" can be evaluated by, for example, plastic extension at the maximum test force specified in JIS-Z2241: 2011. The standard electrode potential of the low-ductility conductor is preferably comparable to that of a negative electrode current collector of a lithium ion battery. As the low-ductility conductor, the same material as the negative electrode current collector of the lithium ion battery can be used, and for example, copper or a copper alloy can be used. Examples of copper include C1020 and C1100 specified in JIS-H3100: 2018. Examples of the copper alloy include C1441, C1921, C1940, and C7250 specified by the same JIS.

FIG. 2 is a cross-sectional view illustrating a fixed portion between a case 201 and a negative electrode current collector 202 of the battery 200 by the terminal component 1. As illustrated in FIG. 2, the shaft portion 10 of the terminal component 1 penetrates the case 201 and the negative electrode current collector 202 in the case 201 from an outer side (the Z2 side) to an inner side (the Z1 side) of the case 201 of the battery 200. On the inner side (on the Z1 side) of the case 201, the terminal component 1 is crimped by bending and expanding an end portion of the bottomed hole portion 11 of the shaft portion 10 in the directions (in the X1 and X2 directions and in the Y1 and Y2 directions) orthogonal to an axial direction (in the Z1 direction). In this state, the terminal component 1 is electrically connected to the negative electrode current collector 202 and fixes the negative electrode current collector 202 to the case 201. A packing 207 is provided between the flange portion 20 of the terminal component 1 and the case 201, and a packing 208 is provided between the case 201 and the negative electrode current collector 202. The packings 207, 208 prevent leakage of an electrolytic solution in the battery 200.

As illustrated in FIG. 2, in a state in which the terminal component 1 is crimped, the surface 21 of the flange portion 20 of the terminal component 1 on the side (on the Z2 side) opposite to the shaft portion 10 is in contact with and electrically connected to a bus bar 209. The battery 200 is connected to another battery or an external electronic device (not illustrated) via the bus bar 209.

Hereinafter, a method for manufacturing a terminal component for a battery according to the embodiment of the present invention will be described with reference to the drawings as appropriate using a method for manufacturing the terminal component 1 described above as an example.

The method for manufacturing the terminal component 1 according to the embodiment of the method for manufacturing a terminal component for a battery according to the present invention includes the following steps (A) to (G). (A) Step of forming a clad piece from a clad plate (B) Step of forming a convex portion corresponding to the shaft portion from the clad piece (C) Step of extending the convex portion to form the shaft portion (D) Step of forming an intermediate bottomed hole portion on one end side of the shaft portion (E) Step of forming the bottomed hole portion on the one end side of the shaft portion (F) Step of forming the flange portion by pressing the other end side of the shaft portion (G) Step of trimming the outermost peripheral portion of flange portion

The above steps (A) to (G) are preferably performed by transfer press forming. Hereinafter, each step will be described.

### (A) Step of Forming Clad Piece from Clad Plate

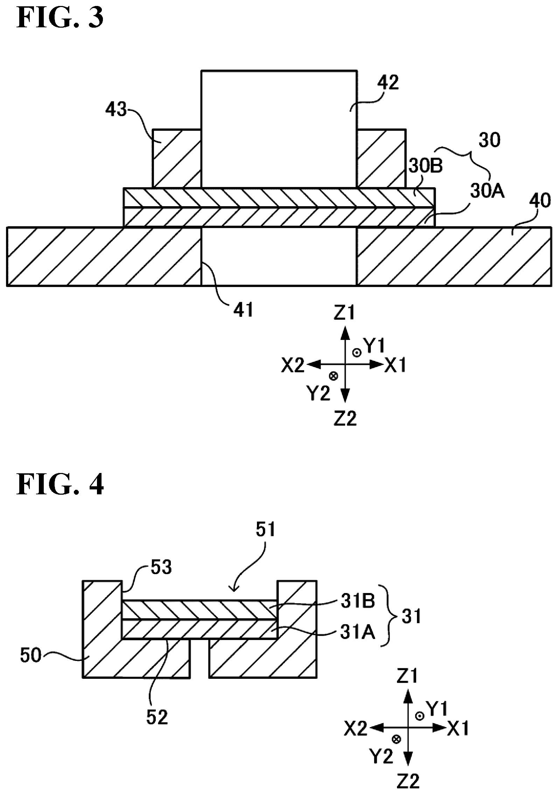

FIG. 3 is a cross-sectional view illustrating a step (A) of forming a clad piece 31 (see FIG. 4) from a clad plate 30. As illustrated in FIG. 3, the clad plate 30 is formed by laminating and joining a high-ductility conductor layer 30A and a low-ductility conductor layer 30B having a lower ductility than the high-ductility conductor layer 30A in a thickness direction (in the Z1 and Z2 directions). The high-ductility conductor layer 30A is a layer made of a conductor having a standard electrode potential comparable to that of the bus bar of the battery. The high-ductility conductor layer 30A may include, for example, aluminum or an aluminum alloy. The low-ductility conductor layer 30B is a layer made of a conductor having a lower ductility than the high-ductility conductor and having a standard electrode potential comparable to that of the negative electrode current collector of the battery. The low-ductility conductor layer 30B may include, for example, copper or a copper alloy.

In order to form the clad piece 31 (see FIG. 4) from the clad plate 30, punching is performed by disposing the clad plate 30 on a die 40 (on the Z1 side) having a hole 41 of a predetermined shape as illustrated in FIG. 3 and lowering a punch 42 having a predetermined shape from above (on the Z1 side) using a pressing machine or the like. The predetermined shape herein means a shape corresponding to a shape of the clad piece 31. Thus, the clad piece 31 can be produced from the clad plate 30. At this time, as illustrated in FIG. 3, a guide 43 for guiding the punch 42 may be provided. Although FIG. 3 illustrates a configuration in which punching is performed in a state in which the clad plate 30 is disposed such that the high-ductility conductor layer 30A is in contact with the die 40, punching may be performed in a state in which the clad plate 30 is disposed such that the low-ductility conductor layer 30B is in contact with the die 40.

### (B) Step of Forming Convex Portion Corresponding to Shaft Portion from Clad Piece

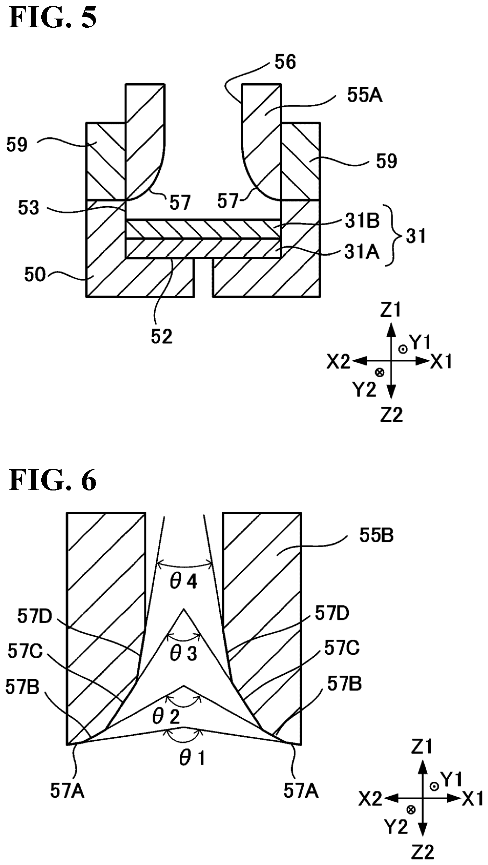

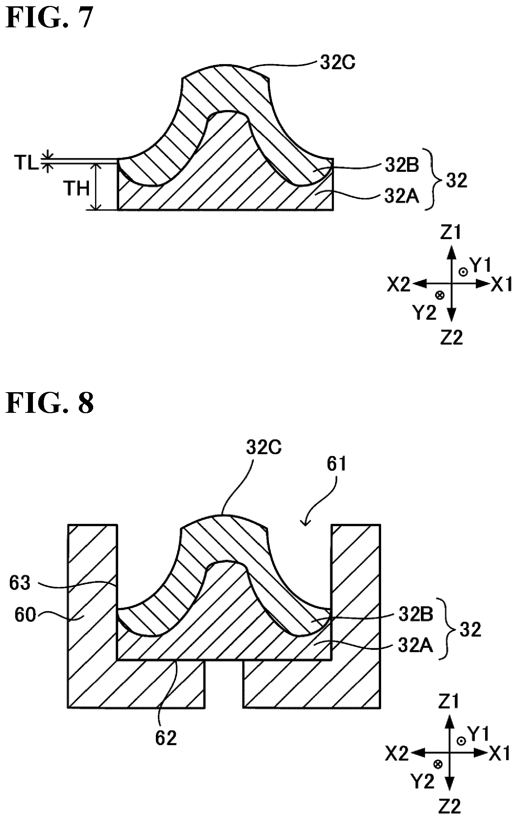

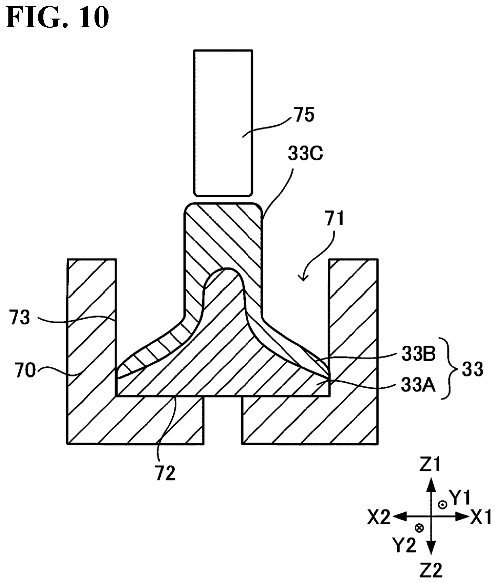

FIGs. 4 and 5 are cross-sectional views illustrating the step (B) of forming a convex portion 32C (see FIG. 7) corresponding to the shaft portion 33C (see FIG. 10) from the clad piece 31. FIG. 4 illustrates a step of disposing the clad piece 31 in a die 50 in the step (B). FIG. 5 illustrates a step of forming the convex portion 32C corresponding to the shaft portion 33C from the clad piece 31 in the step (B).

First, as illustrated in FIG. 4, when the clad piece 31 formed by punching the clad plate 30 in the thickness direction (in the Z2 direction) is disposed in the die 50 corresponding to a lower die, the clad piece 31 is disposed in the die 50 such that the high-ductility conductor layer 31A is in contact with a bottom surface 52 of the vertical hole portion 51 opening upward (toward the Z1 side). At this time, an inner peripheral wall of the vertical hole portion 51 of the die 50 is disposed slightly outside an outer peripheral end surface (a side surface in the direction orthogonal to the Z1 and Z2 directions) of the clad piece 31. Therefore, an inner peripheral wall 53 of the vertical hole portion 51 of the die 50 and the outer peripheral end surface of the clad piece 31 are brought close to each other to be in a state of clearance fit, so that the outer peripheral end surface (the side surface in the direction orthogonal to the Z1 and Z2 directions) and a lower surface (a surface on the Z2 side) of the high-ductility conductor layer 31A are restrained by the die 50. The die 50 is an example of the lower die in the present invention.

Next, as illustrated in FIG. 5, when a punch 55A corresponding to an upper die is inserted into the vertical hole portion 51 of the die 50 to press an upper surface (the surface on the Z1 side) of the low-ductility conductor layer 31B of the clad piece 31, the low-ductility conductor layer 31B of the clad piece 31 is pressed from an outer peripheral portion of the upper surface by a concave portion 56 for forming a convex portion that opens downward (on the Z2 side) and extends upward (on the Z1 side), which is used for forming the convex portion 32C (see FIG. 7) corresponding to the shaft portion 10 at a center of the punch 55A in the direction (in the X1 and X2 directions and in the Y1 and Y2 directions) orthogonal to the thickness direction of the clad piece 31. As a result, while plastic deformation of the outer peripheral side surface (the surface in the direction orthogonal to the Z1 and Z2 directions) of the clad piece 31 is restrained by the inner peripheral wall 53 of the vertical hole portion 51 of the die 50, the clad piece 31 is plastically deformed toward the concave portion 56 for forming a convex portion, so that the convex portion 32C can be formed inside the concave portion 56 for forming a convex portion. The punch 55A is an example of the upper die in the present invention.

The punch 55A has, at the center in the direction (in the X1 and X2 directions and in the Y1 and Y2 directions) orthogonal to the axial direction (in the Z1 and Z2 directions) thereof, the concave portion 56 for forming a convex portion that opens downward (toward the Z2 side) and extends upward (toward the Z1 side). The axial direction of the punch 55A corresponds to the thickness directions of the clad plate 30 and the clad piece 31. The direction orthogonal to the axial direction of the punch 55A corresponds to the direction orthogonal to the thickness directions of the clad plate 30 and the clad piece 31. In the punch 55A, the concave portion 56 for forming a convex portion may be formed as a hole penetrating in the upper-lower direction (in the Z1 and Z2 directions), or may be formed as a non-penetrating concave portion.

As described above, while the plastic deformation of the outer peripheral side surface (the surface in the direction orthogonal to the Z1 and Z2 directions) of the clad piece 31 is restrained by the inner peripheral wall 53 of the vertical hole portion 51 of the die 50, the low-ductility conductor layer 31B of the clad piece 31 is pressed by the punch 55A, so that the clad piece 31 can be plastically deformed toward the concave portion 56 for forming a convex portion of the punch 55A. In the thickness direction (in the Z1 and Z2 directions) of the clad piece 31, a stress acting on a central portion of the clad piece 31 is smaller than a stress acting on an outer edge portion of the clad piece 31 due to the pressing of the concave portion 56 for forming a convex portion of the punch 55A. Therefore, the low-ductility conductor layer 31B is more likely to plastically flow toward the central portion of the clad piece 31, and thus, this allows for suppressing occurrence of burrs due to a distorted plastic flow of the low-ductility conductor layer 31B on an upper surface (on the Z1 side) of the outer edge portion of the clad piece 31.

As illustrated in FIG. 5, an inclined surface 57 that is inclined upward (toward the Z1 side) toward an inner side (toward the center of the clad piece 31) is preferably provided on an inner peripheral edge of the concave portion 56 for forming a convex portion of the punch 55A. The inclined surface 57 is provided on the inner peripheral edge of the concave portion 56 for forming a convex portion of the punch 55A, and thus, this allows for causing the low-ductility conductor layer 31B to plastically flow upward (toward the Z1 side) along the inclined surface 57 inside the concave portion 56 for forming a convex portion.

A gradient of the inclined surface 57 of the concave portion 56 for forming a convex portion of the punch 55A with respect to the bottom surface 52 of the vertical hole portion 51 of the die 50 preferably increases toward the inside thereof (toward the center of the clad piece 31). That is, it is preferable that an angle formed by the outer peripheral surface of the punch 55A and a contact surface against the inclined surface 57 is less than 90 degrees and gradually decreases from an outer peripheral side of the punch 55A toward the inner side (toward the center of the clad piece 31), assuming the contact surface against the inclined surface 57. Actually, in a cross section (a cross section illustrated in FIG. 5) along the axial direction (in the Z1 and Z2 directions) of the punch 55A, it is preferable that an angle formed by a line indicating the outer peripheral surface of the punch 55A and a line (tangent) indicating the contact surface of the inclined surface 57 is less than 90 degrees and gradually decreases from the outer peripheral side of the punch 55A toward the inner side (toward the center of the clad piece 31). When the gradient of the inclined surface 57 increases inward (toward the center of the clad piece 31), the stress acting on the clad piece 31 due to the pressing decreases from the outer edge portion toward the central portion of the clad piece 31. Therefore, the plastic flow of the clad piece 31 easily proceeds toward the center (toward the center of the clad piece 31) in the X direction, and the low-ductility conductor layer 31B easily plastically flows toward the concave portion 56 for forming a convex portion. When the clad piece 31 is pressed by the punch 55A, the guide 59 that guides the punch 55A in the upper-lower direction (in the Z1 and Z2 directions) may be used.

Although the punch 55A illustrated in FIG. 5 has the inclined surface 57 whose gradient continuously increases toward the center of the clad piece 31, a punch having another shape, for example, a punch having a shape like a punch 55B illustrated in FIG. 6 may be used.

FIG. 6 is a cross-sectional view illustrating the punch 55B according to another embodiment. As illustrated in FIG. 6, the punch 55B has a shape different from that of the punch 55A illustrated in FIG. 5. The punch 55B has a plurality of inclined surfaces 57A, 57B, 57C, and 57D that are continuous from an outer peripheral portion of a lower end of the punch 55B toward the inner side (toward the center of the clad piece 31). The inclined surfaces 57A to 57D are continuous in the order of the inclined surfaces 57A, 57B, 57C, and 57D from the outer peripheral portion toward the inner side (toward the center of the clad piece 31). Among gradients of the inclined surfaces 57A to 57D of the concave portion 56 for forming a convex portion of the punch 55B with respect to the bottom surface 52 of the vertical hole portion 51 of the die 50, the gradient of the inclined surface 57A is preferably smallest, and the gradients preferably increase in order of the inclined surface 57B, the inclined surface 57C, and the inclined surface 57D, preferably.

Each of the inclined surface 57A, the inclined surface 57B, the inclined surface 57C, and the inclined surface 57D may be a flat surface or a curved surface. For example, each of the inclined surface 57A, the inclined surface 57B, the inclined surface 57C, and the inclined surface 57D may be a conical surface. In this case, when taper angles of the inclined surface 57A, the inclined surface 57B, the inclined surface 57C, and the inclined surface 57D are defined as θ1, θ2, θ3, and θ4, respectively, it is preferable that θ1 > θ2 > θ3 > θ4.

FIG. 7 is a cross-sectional view illustrating an intermediate body 32 formed in the step (B) by the die 50 and the punch 55A illustrated in FIG. 5. The intermediate body 32 can also be formed by the die 50 illustrated in FIG. 5 and the punch 55B illustrated in FIG. 6. As illustrated in FIG. 7, the intermediate body 32 has a high-ductility conductor layer 32A and a low-ductility conductor layer 32B, and the convex portion 32C is provided in a central portion on the side of the low-ductility conductor layer 32B. A position of the convex portion 32C on the side of the low-ductility conductor layer 32B corresponds to the central portion of the clad piece 31 on the side of the low-ductility conductor layer 32B.

When the thickness of the high-ductility conductor layer 32A at the outer peripheral edge portion of the intermediate body 32 is defined as TH and the thickness of the low-ductility conductor layer 32B at the outer peripheral edge portion of the intermediate body 32 is defined as TL, TL/(TH + TL) ≤ 0.2 is preferably satisfied, and TL/(TH + TL) ≤ 0.1 is more preferably satisfied. That is, in the step (B), the convex portion 32C is preferably extended into the concave portion 56 for forming a convex portion of the punch 55A until TL/(TH + TL) ≤ 0.2 is satisfied, and the convex portion 32C is more preferably extended into the concave portion 56 for forming a convex portion of the punch 55A until TL/(TH + TL) ≤ 0.1 is satisfied.

### (C) Step of Extending Convex Portion to Form Shaft Portion

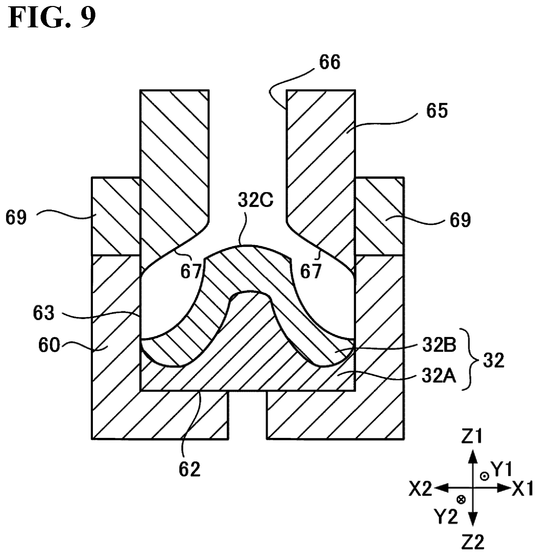

FIGs. 8 and 9 are cross-sectional views illustrating the step (C) of extending the convex portion 32C to form the shaft portion 33C (see FIG. 10). FIG. 8 illustrates a state in which the intermediate body 32 is disposed on a die 60 in the step (C). As illustrated in FIG. 8, in a vertical hole portion 61 of the die 60 that opens upward (toward the Z1 side) of the die 60, the intermediate body 32 is disposed such that the high-ductility conductor layer 32A side thereof is in contact with a bottom surface 62 of the vertical hole portion 61. The side surface of the intermediate body 32 in the direction orthogonal to the Z1 and Z2 directions is close to an inner peripheral wall 63 of the vertical hole portion 61 of the die 60. As a result, the surface on the Z2 side of the high-ductility conductor layer 32A and the side surface in the direction orthogonal to the Z1 and Z2 directions are restrained by the bottom surface 62 and the inner peripheral wall 63 of the vertical hole portion 61 of the die 60.

Next, the shaft portion 33C is formed by extending the convex portion 32C of the intermediate body 32. FIG. 9 illustrates a step of pressing the outer peripheral portion of the low-ductility conductor layer 32B of the intermediate body 32 by a punch 65 to extend the convex portion 32C in the step (C). As illustrated in FIG. 9, the outer peripheral portion of the low-ductility conductor layer 32B of the intermediate body 32 is pressed by the punch 65 from above the vertical hole portion 61 of the die 60 (from the Z1 side). The punch 65 has a concave portion 66 for forming a shaft portion that opens downward (toward the Z2 side) and extends upward (toward the Z1 side) inside the punch 65 (at the center of the clad piece 31). The concave portion 66 for forming a shaft portion may be a hole that penetrates the punch 65 in the upper-lower direction (in the Z1 and Z2 directions), or may be a non-penetrating concave portion. By pressing the outer peripheral portion of the low-ductility conductor layer 32B of the intermediate body 32 with the punch 65, while the plastic deformation of the side surfaces of the clad piece 31 in the X1 and X2 directions is restrained by the inner peripheral wall 63 of the vertical hole portion 61 of the die 60, the convex portion 32C of the intermediate body 32 is plastically deformed toward the Z1 side inside the concave portion 66 for forming a shaft portion, so that the shaft portion 33C (see FIG. 10) can be formed inside the concave portion 66 for forming a shaft portion. At this time, since the stress acting on the central portion of the intermediate body 32 due to the pressing becomes smaller than the outer edge portion, the low-ductility conductor layer 32B is more likely to plastically flow toward the center in the direction orthogonal to the thickness direction. Therefore, it is possible to suppress the occurrence of burrs in the low-ductility conductor layer 32B.

As illustrated in FIG. 9, an inclined surface 67 that is inclined upward (toward the Z1 side) toward the inner side (toward the center of the clad piece 31) is preferably provided on the inner peripheral edge portion of the concave portion 66 for forming a shaft portion of the punch 65. When the inclined surface 67 is provided, the low-ductility conductor layer 32B can be caused to more smoothly plastically flow along the inclined surface 67 toward the upper side (toward the Z1 side) in the concave portion 66 for forming a shaft portion. When the intermediate body 32 is pressed by the punch 65, a guide 69 that guides the punch 65 in the upper-lower direction (the Z1 and Z2 directions) may be used.

### (D) Step of Forming Intermediate Bottomed Hole Portion on One End Side of Shaft Portion

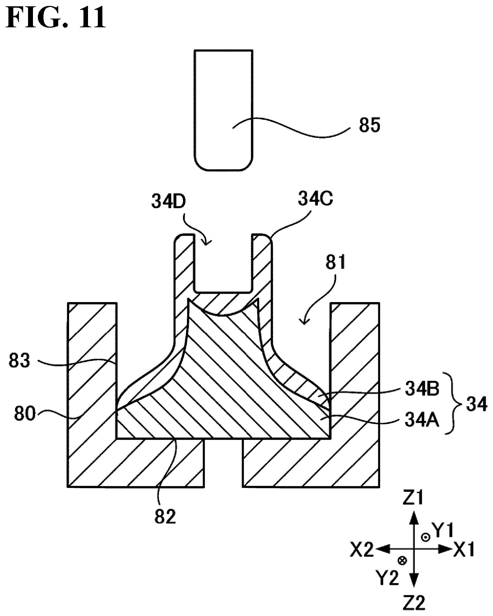

FIG. 10 is a cross-sectional view illustrating the step (D) of forming an intermediate bottomed hole portion 34D (see FIG. 11) on the one end side of the shaft portion 33C. FIG. 10 illustrates a state in which an intermediate body 33 formed in the step (C) is disposed on a die 70 in the step (D). As illustrated in FIG. 10, the intermediate body 33 formed in the step (C) is disposed in a vertical hole portion 71 opening upward (toward the Z1 side) of the die 70 such that the shaft portion 33C faces upward (toward the Z1 side) and the high-ductility conductor layer 33A side is in contact with a bottom surface 72 of the vertical hole portion 71. A side surface of the intermediate body 33 in the direction orthogonal to the Z1 and Z2 directions is close to an inner peripheral wall 73 of the vertical hole portion 71 of the die 70. As a result, the surface on the Z2 side of the high-ductility conductor layer 33A and the side surface in the direction orthogonal to the Z1 and Z2 directions are restrained by the bottom surface 72 and the inner peripheral wall 73 of the vertical hole portion 71 of the die 70.

Next, as illustrated in FIG. 10, a punch 75 having a substantially flat tip end portion at a tip end thereof is lowered from the upper side (from the Z1 side) to the lower side (to the Z2 side) of the vertical hole portion 71 of the die 70, and the tip end portion of the shaft portion 33C is pressed by the tip end portion of the punch 75. Accordingly, the intermediate bottomed hole portion 34D (see FIG. 11) to which a shape of the tip end portion of the punch 75 is transferred is formed at the tip end portion of the shaft portion 33C.

### (E) Step of Forming Bottomed Hole Portion on One End Side of Shaft Portion

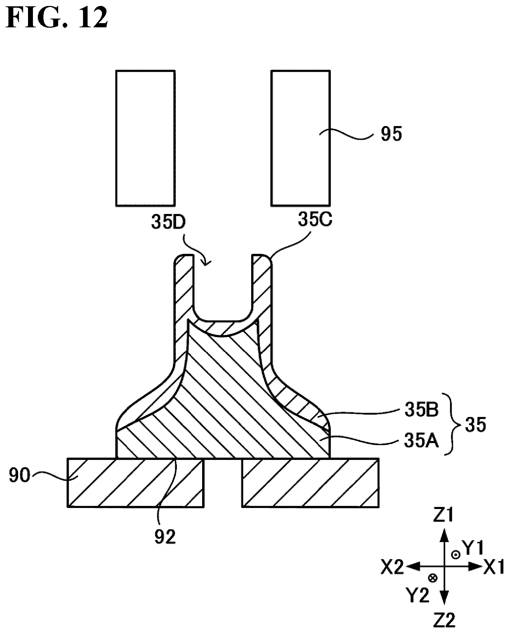

FIG. 11 is a cross-sectional view illustrating the step (E) of forming a bottomed hole portion 35D (see FIG. 12) on the one end side (on the Z1 side) of the shaft portion 34C having the intermediate bottomed hole portion 34D of an intermediate body 34. As illustrated in FIG. 11, in the step (E), the intermediate body 34 obtained in the step (D) is disposed in a vertical hole portion 81 opening upward (toward the Z1 side) of a die 80 such that the intermediate bottomed hole portion 34D of the intermediate body 34 faces upward (toward the Z1 side) and a high-ductility conductor layer 34A side is in contact with a bottom surface 82 of the vertical hole portion 81 of the die 80. A side surface of the intermediate body 34 in the direction orthogonal to the Z1 and Z2 directions is close to an inner peripheral wall 83 of the vertical hole portion 81 of the die 80. Accordingly, the surface on the Z2 side of the high-ductility conductor layer 34A and the side surface in the direction orthogonal to the Z1 and Z2 directions are restrained by the bottom surface 82 and the inner peripheral wall 83 of the vertical hole portion 81 of the die 80.

Next, as illustrated in FIG. 11, a punch 85 is lowered from the upper side (from the Z1 side) toward the lower side (toward the Z2 side) of the vertical hole portion 81 of the die 80, the tip end portion of the punch 85 is inserted into the intermediate bottomed hole portion 34D, and the punch 85 is further lowered to press the intermediate body 34. As a result, the bottomed hole portion 35D (see FIG. 12) to which a shape of the tip end portion of the punch 85 is transferred is formed.

### (F) Step of Forming Flange Portion by Pressing Other End Side of Shaft Portion

FIG. 12 is a cross-sectional view illustrating the step (F) of forming the flange portion by pressing the other end side (the Z2 side) of the shaft portion 35C of an intermediate body 35. The flange portion formed here is a preform of the flange portion corresponding to the flange portion 20 illustrated in FIG. 1. As illustrated in FIG. 12, in the step (F), the intermediate body 35 obtained in the step (E) is disposed on an upper surface 92 of a die 90. Specifically, the intermediate body 35 is disposed on the upper surface 92 of the die 90 such that the bottomed hole portion 35D of the intermediate body 35 faces upward (toward the Z1 side) and the high-ductility conductor layer 35A side is in contact with the upper surface 92 of the die 90.

Next, as illustrated in FIG. 12, a punch 95 is lowered from the upper side (the Z1 side) to the lower side (the Z2 side). At this time, the punch 95 is lowered toward an inclined surface on the Z1 side on the outer peripheral side relative to the shaft portion 35C of the intermediate body 35 (the inclined surface on an outer peripheral side of the low-ductility conductor layer 35B). By appropriately pressing the inclined surface on the Z1 side on the outer peripheral side relative to the shaft portion 35C of the intermediate body 35 by the die 90 and the punch 95, the inclined surface on the outer peripheral side is plastically deformed toward the Z2 side, and the flange portion (the preform of the flange portion) is formed.

### (G) Step of Trimming Outermost Peripheral Portion of Flange Portion

Next, the outermost peripheral portion of the flange portion (the preform of the flange portion) of the intermediate body (not illustrated) on which the flange portion (the flange portion original shape) is formed in the step (F) is trimmed as necessary. As a result, the terminal component 1 having the shaft portion 10 and the flange portion 20 illustrated in FIG. 1 is completed. When the trimming is not performed, the flange portion (the preform of the flange portion) formed in the step (F) corresponds to the flange portion 20 illustrated in FIG. 1.

As described above, in the method for manufacturing the terminal component 1 according to the embodiment of the method for manufacturing a terminal component for a battery according to the present invention, in the step (A), the clad piece 31 is formed by punching the clad plate 30 in the thickness direction (in the Z1 and Z2 directions). Then, in the step (B), when the clad piece 31 formed in the step (A) is disposed in the lower die (the die 50), the clad piece 31 is disposed in the lower die (the die 50) such that the high-ductility conductor layer 31A is in contact with the bottom surface 52 of the vertical hole portion 51 that opens upward (toward the Z1 side), and when the upper die (the punch 55A) is inserted into the vertical hole portion 51 of the lower die (the die 50) to press the upper surface (the Z1 side) of the low-ductility conductor layer 31B of the clad piece 31, the clad piece 31 is plastically deformed toward a concave portion 56 for forming a convex portion, using the concave portion 56 for forming a convex portion that opens downward (toward the Z2 side), extends upward (toward the Z1 side), and is used for forming the convex portion 32C corresponding to the shaft portion 33C at the center in the direction (in the X1 and X2 directions and in the Y1 and Y2 directions) orthogonal to the thickness direction of the clad piece 31 in the upper die (the punch 55A), while the plastic deformation of the side surface of the clad piece 31 in the X direction is restrained by the inner peripheral wall 53 of the vertical hole portion 51 of the lower die (the die 50), thereby forming the convex portion 32C inside the concave portion 56 for forming a convex portion.

Accordingly, in the step (B) of forming the convex portion 32C corresponding to the shaft portion 33C from the clad piece 31, the side surface of the clad piece 31 in the direction orthogonal to the thickness direction is restrained by the inner peripheral wall 53 of the vertical hole portion 51, and pressing is performed from the side of the low-ductility conductor layer 31B by the punch 55A having the concave portion 56 for forming a convex portion opening downward (toward the Z2 side), so that the stress acting on the central portion of the clad piece 31 due to pressing is smaller than that of the outer edge portion thereof, and the low-ductility conductor layer 31B is more likely to plastically flow toward the center. Therefore, the intrusion of the low-ductility conductor layer 31B between the die 50 and the punch 55A at the outer edge portion of the clad piece 31 is suppressed, and occurrence of burrs of the low-ductility conductor layer 31B between the die 50 and the punch 55A is suppressed. In addition, while being restrained by the die 50, the high-ductility conductor layer 31A is pressed from the side of the low-ductility conductor layer 31B (from the Z1 side). Thus, the intrusion of the high-ductility conductor layer 31A between the die 50 and the punch 55A at the outer edge portion of the clad piece 31 is suppressed, and the occurrence of burrs of the high-ductility conductor layer 31A between the die 50 and the punch 55A is suppressed.

Although the method for manufacturing the terminal component 1 according to the embodiment of the method for manufacturing a terminal component for a battery according to the present invention has been described above, the present invention is not limited to the above embodiment, and various modifications can be made without changing the gist of the above embodiment. For example, the step (E) of forming the bottomed hole portion 35D and the step (F) of forming the flange portion may be performed simultaneously.

### INDUSTRIAL APPLICABILITY

The terminal component for a battery according to the present invention can be used, for example, by being connected to an electrode of a lithium ion secondary battery.

The present application claims priority based on a Japanese Patent Application No. 2023-208590 filed on December 11, 2023.

## Claims

1. A method for manufacturing a terminal component for a battery using a clad plate formed by laminating and joining a high-ductility conductor layer and a low-ductility conductor layer having a lower ductility than the high-ductility conductor layer in a thickness direction, the terminal component including:
a shaft portion extending along the thickness direction of the clad plate; and
a flange portion extending from the shaft portion in a direction orthogonal to the thickness direction, the method comprising:
a step (1) of disposing, in a lower die, a clad piece formed by punching the clad plate in the thickness direction such that the high-ductility conductor layer is in contact with a bottom surface of a vertical hole portion opened upward in the lower die; and
a step (2) of plastically deforming, using a concave portion for forming a convex portion that opens downward and extends upward in an upper die, and is for forming a convex portion corresponding to the shaft portion at a center of the clad piece in the orthogonal direction, the clad piece toward the concave portion for forming a convex portion to form the convex portion inside the concave portion for forming a convex portion, while restraining plastic deformation of a side surface of the clad piece by an inner peripheral wall of the vertical hole portion of the lower die, when the upper die is inserted into the vertical hole portion of the lower die to press an upper surface of the low-ductility conductor layer of the clad piece.

2. The method for manufacturing a terminal component according to claim 1,
wherein an inner peripheral edge of the inner peripheral wall of the concave portion for forming a convex portion in the upper die is provided with an inclined surface that is inclined upward toward a center in the orthogonal direction.

3. The method for manufacturing a terminal component according to claim 1 or 2,
wherein a gradient of the inclined surface of the inner peripheral edge of the upper die with respect to the bottom surface of the vertical hole portion of the lower die increases toward a center in the orthogonal direction.

4. The method for manufacturing a terminal component according to any one of claims 1 to 3,
wherein the upper die has a plurality of flat surfaces or curved surfaces continuous from an outer peripheral portion of a lower end toward a center in the orthogonal direction, and gradients of the plurality of flat surfaces or curved surfaces with respect to the bottom surface of the vertical hole portion of the lower die increase toward a center in the orthogonal direction.

5. The method for manufacturing a terminal component according to any one of claims 1 to 4,
wherein the upper die has a plurality of conical surfaces continuously inclined upward from an outer peripheral portion of a lower end toward a center in the orthogonal direction, and the plurality of conical surfaces have a smaller taper angle toward an upper portion.

6. The method for manufacturing a terminal component according to any one of claims 1 to 5,
wherein in the step (2), when a thickness of the high-ductility conductor layer at an outer peripheral edge of the clad piece is defined as TH and a thickness of the low-ductility conductor layer at the outer peripheral edge of the clad piece is defined as TL, the clad piece is extended into the concave portion for forming a convex portion in the upper die until TL/(TH + TL) ≤ 0.2 is satisfied.

7. The method for manufacturing a terminal component according to any one of claims 1 to 6, further comprising, a step (3) of forming the shaft portion by extending the convex portion after the step (2).

8. The method for manufacturing a terminal component according to claim 7, further comprising, a step (4) of forming a bottomed hole portion on one end side of the shaft portion after the step (3).

9. The method for manufacturing a terminal component according to claim 8, further comprising, a step (5) of forming the flange portion extending in a radial direction from the shaft portion by pressing the other end side, which is opposite to the one end side of the shaft portion, after the step (4).

10. The method for manufacturing a terminal component according to claim 9, further comprising, a step (6) of trimming an outermost peripheral portion of the flange portion after the step (5).

11. The method for manufacturing a terminal component according to claim 10,
wherein the steps (1) to (6) are performed by transfer press forming.
